# EUROPEAN PATENT APPLICATION

(11) **EP 4 738 221 A1**
(43) Date of publication of application: **06.05.2026**
(21) Application number: 24209765.7
(22) Date of filing: 30.10.2024
(51) Int. Cl.: G06Q 20/06, G06Q 20/36, G06Q 20/38, H04L 9/32

(54) **A SECURE WALLET HOSTING UNIT**

(71) Applicant: Giesecke+Devrient advance52 GmbH, 81677 München (DE)
(72) Inventor: Abdelrahman, Mostafa, 81677 München (DE)
(74) Representative: Giesecke+Devrient IP

(57) **Abstract**

A secure wallet hosting unit (1), the secure wallet hosting unit (1) hosting monetary value token wallets (2, 3, 4) of different users and comprising:
- a payment processor (20) configured for performing an exchange of an exchanged monetary value token (50) between a monetary value token wallet (2) of the secure wallet hosting unit (1) and another monetary value token wallet (7); and
- a secured storage (30);

wherein the hosted monetary value token wallets (2, 3, 4) respectively comprise at least one monetary value token (50) and a wallet identifier (11),
wherein each monetary value token (50) comprises a secret token data element (12), and
wherein the monetary value token wallets (2, 3, 4) are at least partly stored in the secured storage (30).

In the present solution the secured storage (30) comprises multiple sub-units (31-34). The sub-units (31-34) respectively store a partial secret (51-54) of the secret token data element (12) of the monetary value token (50) and the sub-units (31-34) are configured to use their partial secrets (51-54) of the secret token data element (12) of the monetary value token (50) in a common digital signature creation process.

## Description

The invention relates to a secure wallet hosting unit hosting monetary value token wallets of different users in a transaction system, wherein monetary value tokens of the transaction system are exchanged between monetary value token wallets comprising one or more monetary value tokens.

In monetary value token transaction systems typically a monetary value token is transferred between secure wallets. For example EP 3 671 514 B1, WO 2020/212331 A1, WO 2021/170646 A1, WO 2023/011758 A1 and WO 2023/011761 A1 disclose different aspects of such systems.

In addition to the common secure wallet type of an independent hardware wallet, e.g. smartcard, secure wallets can also be provided as hosted wallets on a hosting unit. For example, WO 2023/011758 A1 and WO 2023/046317 A1 disclose a secure wallet hosting unit, wherein the secure wallet hosting unit hosts monetary value token wallets for different users of the transaction system.

WO 2023/011758 A1 discloses a secure wallet hosting unit including the features of the preamble of claim 1.

According to an object of the invention a secure wallet hosting unit of a transaction system shall be provided which improves security, particularly preventing monetary value tokens from being stolen by attackers, preferably with remaining or increased transaction reliability and/or with remaining or decreased transaction time.

The above-identified objectives are solved by the subject matter of the independent claims. Further advantageous embodiments are described in the dependent claims.

According to an aspect of the present invention, there is provided a secure wallet hosting unit, the secure wallet hosting unit hosting monetary value token wallets of different users and comprising: a payment processor configured for performing an exchange of an exchanged monetary value token between a monetary value token wallet of the secure wallet hosting unit and another monetary value token wallet; and a secured storage. The hosted monetary value token wallets respectively comprise at least one monetary value token and a wallet identifier. Each monetary value token comprises a secret token data element. The monetary value token wallets are at least partly stored in the secured storage.

The secured storage comprises multiple sub-units. The sub-units respectively store a partial secret of the secret token data element of the monetary value token. The sub-units are configured to use their partial secrets of the secret token data element of the monetary value token in a common digital signature creation process.

In contrast to only having stored the secret token data element in a secured storage and to receiving the secret token data element from the secured storage upon request, the secret token data element now not only remains within the secured storage but is further distributed over the sub-units. As a consequence security of the secret token data element can be significantly improved.

It should be further noted that access to the common digital signature would be less critical in terms of security than access to the secret token data element as a whole. Since multiple or all partial secrets are required to create the common digital signature, even access to a partial secret would not be critical.

Each sub-unit only stores a partial secret of the secret token data element. Typically, the partial secrets of the sub-units are mutually different to each other. The secret token data element of the monetary value token of the hosted monetary value token wallet as such however is not stored in the secured storage. Particularly, access to the secret token data element (as a whole), e.g. by an attacker or even by an authorized user of the secure wallet hosting unit, is prevented.

The secure wallet hosting unit preferably further comprises a wallet storage, wherein the partial secrets of the secret token data element of the monetary value token are stored in the secured storage and a further token data element of the monetary value token is stored in the wallet storage. The one or more further token data element of the monetary value token could for example be: a value data element of the monetary value token and/or a token reference of the monetary value token and/or a storage reference of the monetary value token in the secured storage.

A value data element of the monetary value token typically is a number ( > 0) which indicates the monetary value the token represents (in the transaction system). A token reference of the monetary value token may uniquely identify the token in the transaction system and/ or in the token register, preferably being a token reference register. A storage reference of the monetary value token in the secured storage may uniquely identify the monetary value token (and/or the secret token data element of the monetary value token) in the secure wallet hosting unit, particularly in the secured storage. Accordingly, the storage reference is a reference for the secret token data element only indirectly stored in the secured storage. For example, the payment processor and/or the monetary value token wallet can use the storage reference as a reference to the secret token data element of the monetary value token indirectly stored in the secured storage. In the transaction system monetary value token wallets may store monetary value tokens and/or may be configured to exchange one or more monetary value tokens with other monetary value token wallets. For the sake of shortness, a secret token data element of a monetary value token is partly also referred to as the token secret and a monetary value data element of a monetary value token is partly also referred to as the monetary value.

In preferred variants the hosted monetary value token wallets respectively comprise a wallet record, preferably in the wallet storage, including at least the wallet identifier and one or more monetary value token records, preferably including one or more further token data element (as indicated above) and more preferably comprising (or consisting of) the three above-mentioned further token data elements. Optionally, the wallet record may include a further wallet data element, such as a authentication secret key of the wallet and/or a wallet certificate. The certificate may be a certificate for the wallet identifier and/or for an authentication public key of the wallet (of the authentication key pair comprising the public and the private key).

The common digital signature may be a threshold signature and/or an elliptic curve signature, particularly ECDSA signature. The elliptic curve of the EC signature preferably is secp256k1 or secp256r1. Other signature types, such as a Schnorr signature or EdDSA, could be used, however might not be as suitable, particularly for local/hardware monetary value token wallets.

Multiple (or all) partial secrets of the secret token data element of the monetary value token may be required to create the common digital signature. For a threshold signature m out of n partial secrets may be required to create the common digital signature, wherein m is smaller than n (m < n) and preferably m is bigger or equal to 3 (m >= 3). Accordingly, m out of n sub-units of the secured storage use their partial secrets of the secret token data element of the monetary value token in the common digital signature creation process (m<n; m>=3) for creating a common digital threshold signature.

The common digital signature is preferably created within the sub-units. In the digital signature creation process the partial secret of the sub-unit for the secret token data element of the monetary value token of the hosted wallet is only used in the sub-unit.

The common digital signature process is a multi party (threshold) signature process of the sub-units. Preferably, a dishonest majority signature scheme is used. The common digital signature process preferably is a cggmp21 scheme and/or a GG18 scheme. cggmp21 is an ECDSA threshold protocol scheme. cggmp21 is described in more detail in R. Canetti, R. Gennaro, S. Goldfeder, N. Makriyannis and U. Peled "Uc non-interactive, proactive, threshold ecdsa with identifiable aborts", Cryptology ePrint Archive, Paper 2021/060, 2021. Alternatively, the common digital signature process could be a honest majority ECDSA threshold protocol scheme, such as DJNP+20 or BlockDaemon (cf. Cryptology ePrint Archive, Paper 2020/501, 2020), or other multi party (dishonest majority) protocol schemes, such as silent-shard-dkls23-ll (cf. Cryptology ePrint Archive, Paper 2023/765, 2023.).

In preferred variants the hosted monetary value token wallets each comprise one or more storage references, wherein the storage references identifies the corresponding monetary value token and/or the secret token data element of the monetary value token in the secured storage. In the secure wallet hosting unit the secret token data element can be addressed by the storage reference, particularly addressed as a single data element in the secured storage although not being physically stored in the secured storage. The management of the partial secrets is performed in the secured storage. Typically the storage reference will be unique in the secure wallet hosting unit only. However, a token reference of the monetary value token (unique in the transaction system) could also be used as the storage reference.

The secured storage may be configured to provide, preferably to the payment processor, the common digital signature. Particularly, the secured storage upon request of a digital signature (usually created by the secret token data element of the monetary value token) is configured to generate the common digital signature and to provide the common digital signature. The request preferably includes the storage reference of the monetary value token. The secured storage may comprise a corresponding common digital signature generating unit.

The payment processor is preferably configured to send the common digital signature to a token reference register (of the transaction system) and/or to the other monetary value token wallet.

The secured storage may comprise a sub-unit coordinator. The sub-unit coordinator controls the sub-units, particularly controls their operation and/or a communication between the sub-units.

The secured storage may be configured to generate a secret token data element. The secured storage may comprise a token secret generating unit ('token secret' for secret token data element). In first variants a secret token data element is created in the token secret generating unit or in the sub-unit coordinator and the partial secrets for the secret token data element are subsequently derived in the sub-units. In preferred second variants the partial secrets for a secret token data element are created in the sub-units. Optionally the secret token data element in a secrete token data element generation step may be derived in the sub-unit (preferred), the sub-unit coordinator or the secret token data element generating unit. In any of the variants the secrete token data element would only be temporarily stored in the secured storage, e.g. in the sub-unit coordinator or the secret token data element generating unit. Hence, the secrete token data element of the monetary value token of the wallet as such still will not be stored (in a nonvolatile/ permanent manner) in the secured storage.

The secured storage may be configured to provide, preferably to the payment processor or the wallet storage, a token reference of the monetary value token in the transaction system. The token reference in preferred variants is derived from the secret token data element, e.g. derived as a public key of a key pair formed by the secret token data element and the public key or derived as a hash value of the public key, the secret token data element or both. The secured storage may derive the token reference either in the sub-units (from the partial units) or from the secret token data element temporarily and/or exclusively available in the derivation step and/or a secret token data element generation step. In alternative approaches the token reference may be a serial number or a random number generated in the secured storage.

The sub-units are preferably configured to generate their partial secrets of the secret token data element of the monetary value token. As already indicated above the secret token data element itself may not be required for this step.

The secured storage may operate in different modes, in particular it may even operate in different modes for generating partial secrets of a secret token data element of a monetary value token.

A first mode(s) for generating the partial secrets could be referred to as an internal generation mode (and has already been described above). The partial secrets and/or the secret token data element are generated in the secured storage.

A second mode for generating the partial secrets could be referred to as an import mode. In the second mode the secured storage receives a secret token data element of a monetary value token and generates the partial secrets of the sub-units based on the monetary value token. The secured storage may comprise token secret import unit.

In a preferred variant of the second mode, the received secret token data element may only indirectly be used to generate the partial secrets. For increasing security, the partial secrets may be generated for a replacement monetary value token. The replacement monetary value token particularly replacing the monetary value token in the secure wallet hosting unit (and/or in the token (reference) register). The received secret token data element of the monetary value token - preferably also the token reference - (and/or the monetary value token) may be replaced. The replacement monetary value token comprising: the monetary value data element of the monetary value token of the received secret token data element and a replacement secret token data element and optionally a replacement token reference data element. A registration of the monetary value token (reference) of the received secret token data element may be requested to be replaced in the token (reference) register by a registration of a replacement monetary value token (reference). The secured storage may send a registration replacement to the token register and receive a registration confirmation, preferably a signed registration confirmation (for the registration of the replacement monetary value token or its token reference). The secured storage may generate the partial secrets for a replacement monetary value token and provide, preferably to the payment processor or the wallet storage, a replacement token reference.

A third mode for generating the partial secrets could be referred to as a hybrid (or summation) mode. In the third mode the secret token data element is partially generated and partially received (generation + reception = hybrid). A first secret summand may be received and added to a generated secret summand. The secured storage may comprise a summation unit, preferably in addition to the token secret import unit and/or the token secret generating unit. The third mode avoids transmission of the secret token data element between wallets, since only one of two secret summands is transmitted between the wallets. WO2023/036458A1 and WO2024/012624A1 describe details of such summations.

The secured storage may be configured to generate the partial secrets of a secret token data element of a monetary value token from generated first partial secret summands of the secret token data element and from a received second secret summand of the secret token data element. Preferably, each sub-unit generates its first partial secret summand, receives a second secret summand and derives its received second secret summand. A partial secret of the sub-unit is formed by summation of the generated first partial secret summand and a derived second partial secret summand (derived from the received second secret summand).

The partial secrets of a secret token data element may also be referred to as a partial secret set. The n partial secrets of the partial secret set are stored in n sub-units.

The secured storage may also be configured to pre-generate partial secret(s) and/or partial secret summand(s) in the sub-units. One or more pre-generated partial secret sets and/or one or more pre-generated partial secret summand sets may thus be pre-generated in the secured storage. One or more pre-generated partial secrets and/or one or more pre-generated partial secret summands may thus may be generated in each sub-unit. Pre-generated partial secrets (sets) and/or pre-generated partial secret summands (sets) may form a pool of immediately available information/unused sets in the secured storage. The optional step of pre-generation improves performance of the secure storage. Upon receipt of a request, e.g. from the payment processor, one of the pre-generated partial secret sets and/or partial secret summand sets may be used (without having to be generated after receipt of the request).

The secured storage may be configured to perform pre-signing steps (generate a pre-signature) based on the, optionally pre-generated, partial secrets/partial secret sets. Pre-signing does not require the data to be signed and/or involves communication between the sub-units. Preferably, the pre-signing is performed prior to the common digital signature process and/or prior to the exchange and/or before definition of the data to be signed.

The secure wallet hosting unit, the secured storage and/or the payment processor, may be configured to perform, particularly for receiving a monetary value token from the other monetary token wallet:
- generation of a first secret summand, preferably first partial secret summands;
- derivation of a token reference summand from the first partial secret (summands); and
- transmission of the derived token reference summand to the other monetary token wallet;
   and/ or
- reception of a second secret summand;
- summation of the generated first secret summand and the received second secret summand, particularly summation of first partials secret summands and second partial secret summands; and
- optionally derivation of a token reference of the received monetary value token, preferably from the partial secrets;
   and/ or
- reception of a registration conformation and/or a token reference; and
- verification of the registration conformation and/or the token reference, by verifying a signature of the registration conformation and/or by verifying that a received token reference and/or the token reference of the registration confirmation corresponds to a token reference derived after summation of generated and received secret summand.

The secure wallet hosting unit, the secured storage and/or the payment processor, may be configured to perform, particularly for sending a monetary value token to the other monetary token wallet:
- reception of a first token reference summand;
- summation of the received token reference summand and a derived token reference to generate the token reference of the monetary value token to be sent;
   and/ or
- registration of the monetary value token to be sent in the token (reference) register;
- reception of a, preferably signed, registration confirmation from the token (reference) register;
   and/ or
- transmission of a generated second secret summand for the monetary value token and/or a registration confirmation of the token (reference) register for the monetary value token to the other monetary token wallet, wherein preferably also the token reference of the monetary value token is transmitted.

Optionally, the secured storage may be configured to derive a token reference (summand) of the monetary value token from the partial secrets, particularly after summation, and configured to provide the token reference (summand) of the monetary value token, preferably to the payment processor or the wallet storage.

The secured storage may in addition or alternatively be configured to generate a second secret summand of a secret token data element from generated partial secret summands and to provide the second secret summand to the payment processor.

The payment processor of the secure wallet hosting unit, preferably in a first transmission mode, more preferably in a first token sending mode - is configured to send to the other monetary value token wallet a token reference and/or a registration confirmation of a token reference register. The payment processor - preferably in the first mode - may be configured to receive a token reference or a token reference summand of a monetary value token to be sent.

The secured storage of the secure wallet hosting unit may be configured to export a secret token data element of a monetary value token to be sent. The secured storage may comprise a token secret export unit. The secured storage in the export step derives the secret token data element from partial secrets, wherein preferably a sub-unit provides the derived secret token data element to the export unit, and the export unit provides the secret token data element to the payment processor.

For increasing security preferred variants of the export may be used. In first preferred variants of the export, the secured storage encrypts the secret token data element, particularly with a token recipient key or a session encryption key, and provides the encrypted secret token data element to the payment processor.

In second preferred variants of the export, the secure wallet hosting unit creates a replacement monetary value token based on a monetary value token for which partial secrets are stored and provides the secret token data element of the replacement monetary value token only. The replacement monetary value token particularly replacing the monetary value token in the secure wallet hosting unit (and/or in the token (reference) register). The secret token data element of the monetary value token for which the partial secrets are stored - and preferably also the token reference - may be replaced. The replacement monetary value token typically comprising: the monetary value data element of the stored monetary value token, a replacement secret token data element and optionally a replacement token reference data element. A registration of the monetary vale token (reference) of the indirectly stored secret token data element may be requested to be replaced in the token (reference) register by a registration of a replacement monetary value token (reference). The secured storage may send a registration replacement to the token register and receive a registration confirmation, preferably a signed registration confirmation (for the registration of the replacement monetary value token or its token reference). The secured storage may use the stored partial secrets for generating a replacement monetary value token and provide, preferably to the payment processor, the replacement monetary value token and optionally a token reference and/or a registration confirmation of the replacement monetary value token.

In third preferred variants of the export, only secret summands may be exported. Hence, no indirectly stored secret token data element could be exported. Only secret summands, (which are temporary information and/or exchange session information) could be exported in these variants.

The payment processor of the secure wallet hosting unit, preferably in a second transmission mode, is configured to receive the secret (summand) token data element from the secured storage and to send the secret (summand) token data element in the exchange of the monetary value token between the monetary value token wallet of the secure wallet hosting unit and the other monetary value token wallet.

The payment processor of the secure wallet hosting unit, preferably in a third or reception mode, is configured to receive the secret token data element from the other monetary value token wallet and to provide the received secret token data element to the secured storage for storage in the secured storage. In alternative variants only, the received secret token data element is stored in the wallet storage.

A monetary value token transaction system may comprise one or more secure wallet hosting units as described above and one or more of the following: a token register, preferably a token reference register; and/or a token issuer unit; and/or multiple local monetary value token wallets. EP 3 671 514 B1, WO 2020/212331 A1, WO 2021/170646 A1, WO 2023/011758 A1 and WO 2023/011761 A1 describe possible aspects of such monetary value token transaction systems, monetary value tokens, the transactions and their system units.

In the following, the invention or further embodiments and advantages of the invention are explained in more detail based on drawings, wherein the drawings describe only some of the possible embodiments of the invention. At least elements drawn with dashed lines are considered to form optional elements.

The drawings are not to be regarded as true to scale, and individual elements of the drawings may be shown in exaggeratedly large or exaggeratedly simplified form.
Fig. 1 shows a secure wallet hosting unit including monetary value token wallets and a secured storage for storing partial secrets of a secret token data element;
Fig. 2 shows a wallet record of a wallet including multiple token records each including a storage reference to the secured storage;
Fig. 3 shows a secured storage including multiple sub-units for storing partial secrets and optionally including further units; and
Fig. 4 shows steps of an exchange of a monetary value token in a specific mode of a secure wallet hosting unit.

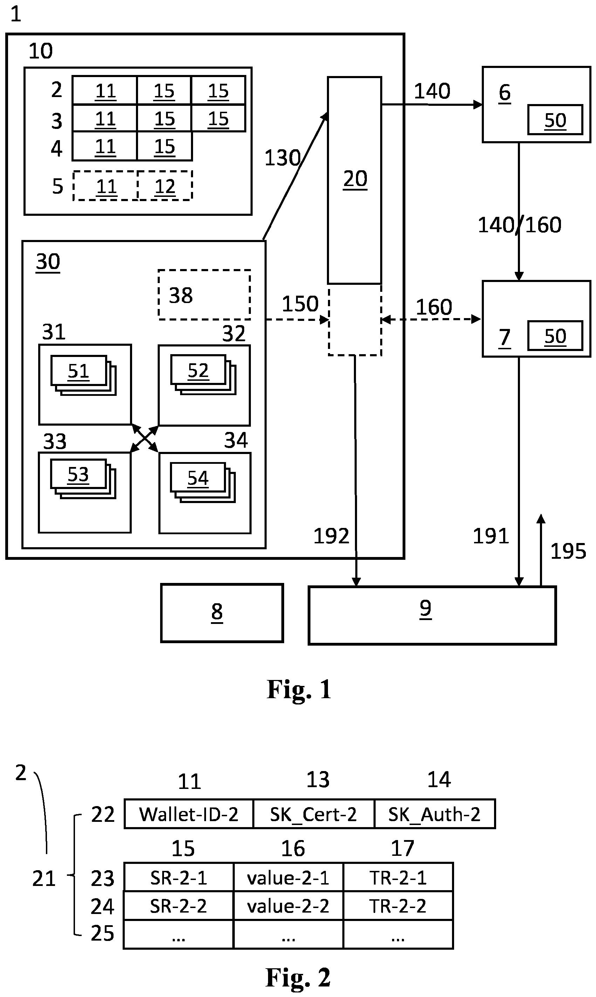

In Fig. 1 a secure wallet hosting unit 1 hosts multiple monetary value token wallets 2, 3, 4, 5 of different users. The secure wallet hosting unit 1 comprises a payment processor 20, a secured storage 30 and preferably a wallet storage 10.

The payment processor 20 is configured to exchange monetary value tokens between one of the hosted monetary value token wallets 2-5 of the secure wallet hosting unit 1 and another monetary token wallet 6, 7. Fig .1 further shows a token issuer unit 8, preferably for issuing and/or redeeming the monetary value tokens of the monetary value token system, and a token register of the monetary value token system, preferably a token reference register 9 which registers valid token references for monetary value tokens of the monetary value token system.

Fig. 1 also shows other monetary value token wallets 6, 7. The other monetary value token wallets for example may be wallets hosted on other secure wallet hosting units (not shown) and/or local monetary value token wallets. Some or all of the other secure wallet hosting units may be configured as the secure wallet hosting unit 1. A portable secure element, like smart card, a secure element of a device, particularly of a mobile communication device, IoT device or payment terminal device, or a wallet application in a trusted execution environment of a (mobile, IoT or payment terminal) device are only some possible examples of typical local monetary value token wallets. Local monetary value token wallets and/or their device are typically assigned to a single user.

The hosted monetary value token wallets 2, 3, 4 respectively comprise at least one monetary value token 50 (or 15, 51-54) and a wallet identifier 11. Each monetary value token of the transaction system comprises a secret token data element 12, preferably a token-individual secret token data element. The monetary value token wallets 2, 3, 4 are partly stored in the secured storage 30, in particular the secret token data element 12 of their monetary value tokens is indirectly stored in the secured storage 30.

The secured storage 30 comprises multiple sub-units 31-34. Each of the sub-units 31-34 stores a respective partial secret 51-54 of the secret token data element 12 of the monetary value token (e.g. of the monetary value token wallet 2). Hence, the secured storage 30 does not directly store the secret token data element 12 as such, but only indirectly stores it. The storing of the partial secrets 51-54 replaces a storing of the secret token data element 12. In a common digital signature creation process the sub-units 31-34 use their respective partial secret 51-54 of the secret token data element 12.

The created common digital signature of the monetary value token can be provided 130 to the payment processor 20 e.g. for an exchange 140 with the other monetary value token wallet 6. The (common) digital signature may be an elliptic curve signature, preferably a ECDSA signature. The common digital signature (process) may be a common digital threshold signature (process). For example, m out of n sub-units 31-34 storing partial secrets each may have to sign in order to create a common digital threshold signature (m < n; n partial secrets). Typically, a length of the secret token data element 12 is smaller than m (or n) times a length of the m (or n) partial secrets 51-54 (Length(secret data element) < m (or n) * Length(partial secret)), preferably smaller than m/2 (or n/2) of a length of the m (or n) partial secrets 51-54 (Length(secret data element) < m/2 (or n/2) * Length(partial secret)), wherein m<= n; n partial secrets.

The monetary value token wallets 2, 3, 4 in a wallet storage 10 of the secure wallet hosting unit 1 - instead of storing the secret token data element 12 of their monetary value tokens - comprise a storage reference 15 per monetary value token 50. A monetary value token wallet 2, 3, 4 may store multiple monetary value tokens/multiple storage references 15. A storage reference 15 identifies the partial secrets 51-54 of the monetary value token (or the indirectly stored secret token data element 12 of the monetary value token) in the secured storage 30.

Optionally, the secure wallet hosting unit 1 may comprise one or more monetary value token wallets 5 directly storing the secret token data element(s) 12 of the monetary value token(s).

Typically, the created common digital signature is sent 140, 160 from the secure wallet hosting unit 1 to the other monetary value token wallet 6, 7 and/or sent to a token reference register 9 in a registration request 192. The created digital signature may also be sent to the token reference register 9 in a registration request 191 from another monetary value token wallet 6, 7.

The registration request 191, 192 typically is a registration replacement request, requesting the token register to replace the registration of (at least) the monetary token value token 15, 51-54 of the hosted monetary token wallet 2 by registration of (at least) one unregistered monetary value token. The unregistered token typically is the token to be exchanged between the wallets. A registration replacement request may comprise: token references of p registered input tokens, their p digital signatures for the replacement and q unregistered output tokens. Thus for example, for p<q a single (p=1) or multiple p tokens may be split into q output tokens or for p>q multiple input tokens may be merged to one token or q output tokens. Of course the overall sum of the monetary values of input tokens must equal the sum of the monetary values of the monetary values of output tokens in a replacement request.

Basically, details and options for secure wallet hosting units, digital signatures, token register (and registration replacements requests) and/or token issuer unit are e.g. known from EP 3 671 514 B1, WO 2020/212331 A1, WO 2021/170646 A1, WO 2023/011758 A1 and WO 2023/011761 A1.

As illustrated in Fig. 1, the partial secrets 51-54 for the monetary value token(s) are stored and/or used in the sub-units 31-34 of the secured storage 30. Hence, the secured storage is improved compared to previous solutions. In addition the monetary value tokens/the monetary value token wallets 2-4 may be partly stored in the wallet storage 10 and partly stored in the secured storage 30. Hence, besides increased security, a good access time to the monetary value tokens/the monetary value token wallets 2-4 can be achieved.

In a previous wallet hosting unit, wallets, monetary value tokens and/or secret token data elements may have been stored in a HSM. Typically, these data were provided from the HSM, e.g. to the payment processor 20, if required and thus externally used (external to the HSM). In another previous variant, the HSM of the wallet hosting unit may store and use these data, e.g. create a signature, create new tokens or amend wallet data, however this approach may create a limitation in the number of transactions or an increased execution time for transactions of the hosted wallets. The present secure wallet hosting unit 1 thus is improved over such previous wallet hosting units.

Each monetary value token typically comprises at least one further token data element not shown in Fig. 1, particularly the monetary value data element of the monetary value token. The monetary value data element indicates the monetary value of the monetary value token in the monetary value token system. As a further token data element not shown in Fig. 1 a token reference, e.g. a token individual public token data element, preferably derivable from the secrete data element 12 (e.g. as the public key of the secret key 12 together forming an asymmetric key pair), and/or a token issuer identifier may be stored.

Each monetary value token wallet 2-7 typically comprises further wallet data elements not shown in Fig. 1, particularly a wallet (authentication) secret key, a wallet (authentication) public key and/or a wallet certificate (for the wallet (authentication) public key and/or the wallet identifier).

Fig. 2 exemplary illustrates data elements 11-17 of the monetary value token wallet 2 in the wallet storage 10. The monetary value token wallets 2-4 may be stored in a wallet records 21 per wallet. The monetary value token wallets/the wallet records comprise wallet data 22 and one or more token records 23-25. The wallet identifier 11 'wallet-ID-2' of the monetary value token wallet 2 forms a wallet data element. Further wallet data elements may be one more certificates and/or one or more (public or secret) keys. Fig. 2 shows a certificate 13, preferably for the public authentication key 'PK_Cert-2' of the monetary value token wallet 2, and a secret key 14, preferably the secret authentication key 'SK_Auth-2' of the monetary value token wallet 2. The keys may form an asymmetric authentication key pair. Each token record 23-25 comprises a storage reference 15 'SR-2-1', 'SR-2-2' of the secret token data element. Further token data elements of the monetary value tokens illustrated are the monetary value 16 'value-2-1', 'value-2-2' and the token reference 17 `TR-2-1', 'TR-2-2'.

Returning to Fig. 1, the figure also illustrates optional steps 150, 160 and an optional token secret export unit 38.

In a monetary value token exchange 140 (send/receive) preferably the secret token data element 12 of the monetary value token exchanged does not have to be exchanged (sent/received). However, in variants specific monetary value token wallets 7, particularly local monetary value token wallets 7, may exchange 160 a monetary value token, wherein the secret token data element is exchanged (sent/received).

For sending a monetary value token 50, which includes its secret token data element 12, from secure wallet hosting unit 1 to the monetary value token wallet 7, the secure wallet hosting unit 1 may use monetary value token wallet 5. Monetary value token wallet 5 stores the secret token data element(s) 12 of its monetary value token(s) in the wallet storage 10.

A monetary value token 50, which includes its secret token data element 12, may be sent from one of the monetary value token wallets 2-4 of the secure wallet hosting unit 1 to the other monetary value token wallet 7. The secure wallet hosting unit 1 may comprise and use the token secret export unit 38. The secure wallet hosting unit 1 may export the indirectly stored secret token data element 12 from the secured storage 30. The secured storage 30 in the export step derives the secret token data element 12 from the partial secrets 51-54. Preferably a sub-unit 51 provides the derived secret token data element to the payment processor 20 or to the export unit 38 and the export unit 30 provides the derived secret token data element to the payment processor. Hence, an exported secret token data element 12 may be provided 150 from the secured storage 30 to the payment processor 20.

Typically, an export of a secret token data element 12 will be further protected. In first preferred variants of the export, the secured storage 30 encrypts the secret token data element 12, particularly with a token recipient key or a session encryption key, and provides the encrypted secret token data element to the payment processor 20. The token token recipient key is a key of the recipient, the other monetary value token wallet 7, only. In this case the payment processor 20 accordingly is unable to decrypt the encrypted secret token data element 12. The token token recipient key may be a public recipient key of an asymmetric key pair of the recipient or a symmetric encryption key of the recipient (known by the recipient only). A session encryption key may be a symmetric key generated for the session of the exchange 160, preferably generated in a mutual authentication phase. Mutual authentication may occur in each exchange 140,160.

In other preferred variants, the stored monetary value token of the monetary value token wallet 2, 3, 4 for which the partial secrets 51-54 are stored in the secured storage 30 is replaced by a replacement monetary value token (to be sent), preferably of the same monetary value, prior to sending 160 the replacement monetary value token. Thus an indirectly stored secret token data element 12 would never been sent. The secure wallet hosting unit 1 creates a replacement monetary value token based on a monetary value token for which partial secrets 51-54 are stored and provides the secret token data element 12 of the replacement monetary value token only. The replacement monetary value token particularly replacing the monetary value token in the secure wallet hosting unit 1 and/or in the token (reference) register 9. The secured storage 30, particularly the export unit 38, or the payment processor 20 may create the replacement monetary value token.

For example, instead of sending the secret token data element 12 of the monetary value token 23, the secret token data element 12 of the monetary value token 23 for which the partial secrets 51-54 are stored - and preferably also the token reference 17 TR-2-1 - is replaced. The monetary value token 50 sent in the exchange 160 thus comprises a replacement secret token data element 12, the monetary value 16 of the previously stored monetary value token 23 and optionally a replacement token reference.

Either the secure wallet hosting unit 1, preferably its payment processor 20, or the monetary value token wallet 7 may register 191, 192 the replacement of the monetary value token in the token reference register 9 (send the corresponding replacement request). A registration of the monetary vale token reference of the indirectly stored secret token data element 12 may be requested to be replaced in the token reference register 9 by a registration of a replacement monetary value token reference.

The token register 9 in response to a(ny) registration 191, 192 provides signed registration confirmation, for example for the registration of the registered token (or its token reference) such as the replacement monetary value token (its replacement token reference).

Thus the secured storage 30 may e.g. use the stored partial secrets 51-54 for generating a replacement monetary value token and provide, preferably to the payment processor 20, the replacement monetary value token 50 and optionally a replacement monetary value token reference 17 and/or a registration confirmation of the replacement monetary value token reference.

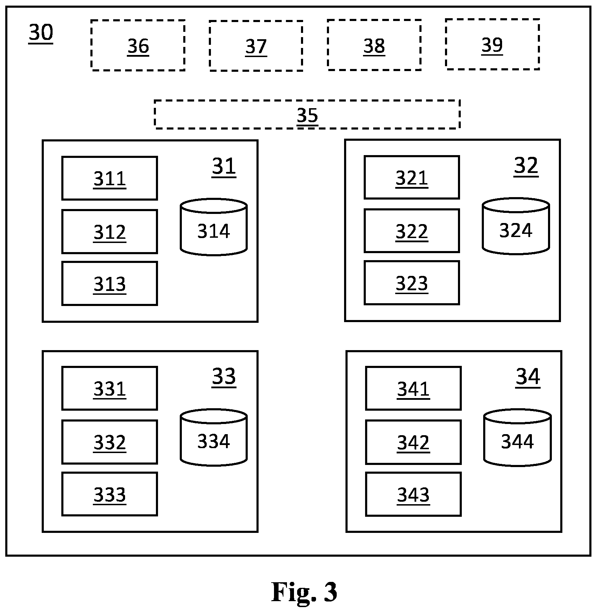

Fig. 3 illustrates possible details of a secured storage 30 and of the sub-units 31-34 thereof.

The sub-unit 31, 32, 33, 34 may comprise a partial signature generation unit 311, 321, 331, 341 and a partial secret storage unit 314, 324, 334, 344. The partial signature generation unit 311, 321, 331, 341 uses the partial secret 51, 52, 53, 54 of the sub-unit 31, 32, 33, 34 stored in the partial secret storage unit 314, 324, 334, 344 to generate one or more of a partial pre-signature, a partial signature for the common digital signature and/or the common digital signature. In variants the partial signature generation unit 311, 321, 331, 341 generates a partial pre-signature before generating the partial signature. Pre-signing steps can be performed without knowing the data to be signed. They can be performed in advance, for example directly after the partial secret generation or at any time before the signature generation process for the data to be signed. Pre-signing steps typically comprise communication between the sub-units. An intermediate step of pre-signing allows faster generation of the common digital signature once it is requested. One of the partial signature generation units 311 preferably generates the common digital signature, in particular after generation of (m-1) partial signatures in other partial signature generation units 321, 331, 341. The common digital signature may require generation of m out of n (or n) partial signatures from the n sub-units 31-34.

The secure wallet hosting unit 1 generates a common digital signature for an exchange 140, 160 of a monetary value token 50 and/or for a registration 191, 192 of a created monetary value token 50, created in the secure wallet hosting unit 1. The created monetary value token 50 can be a replacement monetary value token. The registration replacement request 191, 192 requesting replacement of a registration of at least one (q) registered monetary value token(s) for a registration of at least one (p) unregistered/created monetary value token (p<q, p>q or p=q (=1)). Particularly, the secure wallet hosting unit 1 generates at least one (p) common digital signature per exchange 140, 160 of a monetary value token 50 and/or per registration 191, 192 of at least one (q) created monetary value token 50. For a registration replacement request requesting replacement of registration for p registered monetary value tokens p common digital signatures may be created (p>=1; q>=1).

The sub-unit 31, 32, 33, 34 may comprise a partial secret generation unit 312, 322, 332, 342. For each monetary value token of hosted monetary value token wallets 2-4 created in the secure wallet hosting unit 1 or received in the secure wallet hosting unit 1, partial secrets 51-54 are generated in the sub-units 31-34. The partial secret generation unit 312, 322, 332, 342 of the sub-unit 31, 32, 33, 34 may generate the partial secret 51, 52, 53, 54, preferably internally only. The sub-unit 31, 32, 33, 34may operate in an internal generation mode for generating the partial secret.

The sub-unit 31, 32, 33, 34 may comprise a partial secret management unit 313, 323, 333, 343. The partial secret management unit 313, 323, 333, 343 may be configured to export an indirectly stored secret token data element 12. The partial secret management unit 313, 323, 333, 343 may be configured to import a received secret token data element 12 (or its replacement secret token data element). The sub-unit 31, 32, 33, 34 may operate in an import mode for generating the partial secret 51, 52, 53, 54. Furthermore, the partial secret management unit 313, 323, 333, 343 may be configured to internally create a first summand and to receive a second summand (created outside the secure wallet hosting unit 1 and/or the secured storage 30), wherein the partial secret is generated by adding the first and the second summand. The sub-unit 31, 32, 33, 34 accordingly may operate in a hybrid mode (add internally generated summand and received summand) for generating the partial secret 51, 52, 53, 54.

The secured storage 30 optionally comprises a sub-unit coordinator 35. The sub-unit coordinator 35 may control the sub-units 31-34 of the secured storage 30, particularly in the common signature generation process and/or the partial key generation. For example, the sub-unit coordinator 35 may select and control the m out of n sub-units for a common threshold signature generation. It may provide input for the sub-units, which may be random input, such as a seed, a sub-unit specific input, such as a number derived for the sub-unit, or sub-unit generic input, such as a generic number. It may also provide information received from one or more other sub-units 52, 53, 54 to the sub-unit 51, e.g. one or more partial signatures for the common digital signature.

As further shown in Fig. 2, the secured storage 30 may comprise units 36-39 dedicated for one of the above tasks of the secured storage 30. Secured storage 30 may comprise a summation unit 36. The dedicated units 36-39 may be configured to check if the conditions for executing the task in the secured storage 30 are fulfilled.

A summation unit 36 may be used in the hybrid mode. It may for example be configured to generate a token reference based on a first created token reference summand and a received token reference summand and/or to verify that a received token reference matches a generated token reference. The summation unit 36 may for example check that the task is requested for an exchange 140 (without transmission of the secret token data element 12) of the payment processor 20.

A token secret import unit 37 may be used to import a received secret token data element 12 of a received monetary value token. The token secret import unit 37 may be configured to create and register a replacement monetary value token for the received monetary value token. As described in more detail above the received (and thus externally known) secret token data element 12 is not stored but the replacement token secret would be indirectly stored in the secured storage 30. The import unit 37 may for example check that the task is requested for an incoming exchange 160 (with reception of the secret token data element 12) of the payment processor 20.

The token secret export unit 38 basically has been described already above. It supports the export of a secret token data element 12. It may receive partial secrets 51-54 from the sub-units (or the secret token data element 12 from one of the sub-units) and/or generate the replacement monetary value token. The token secret export unit 38 may check that the task is requested for an outgoing exchange 160 (with sending of a (replacement) secret token data element 12).

Finally, the optional common signature generating unit 39 may receive partial signatures from the sub-units 31-34 and generate the common digital signature based thereon.

Although the aspects of Fig. 2 and 3 have been at least partly described based on the example of Fig. 1, it should be noted that the aspects of Fig. 2 - 4 may be used together or separate from aspects discussed with reference to Fig. 1.

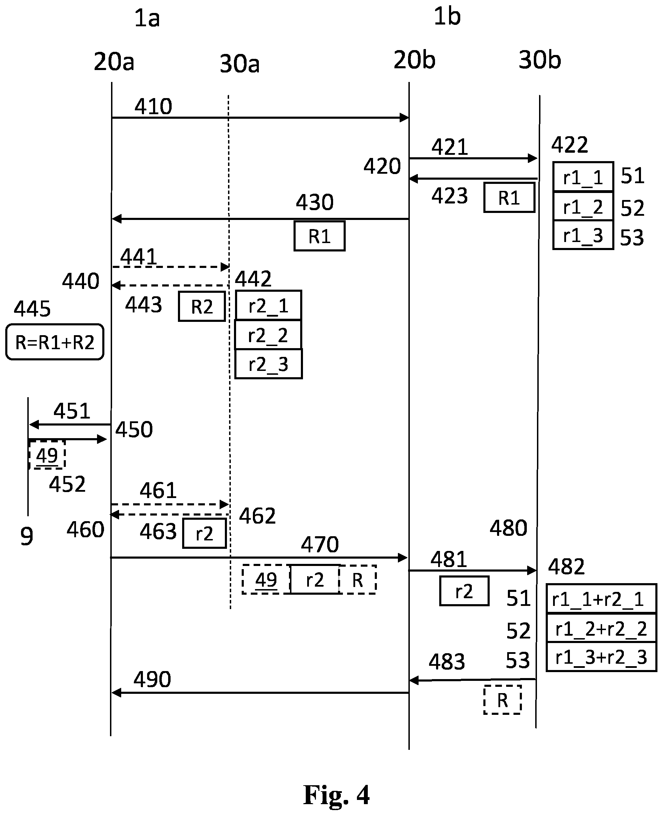

Fig. 4 is an exemplary flow chart of a monetary value token exchange, preferably a monetary value token exchange 140 without transmission of the secret token data element 12. Fig. 4 shows a first secure wallet hosting unit 1a and a second secure wallet hosting unit 1b, each comprising a payment processor 20a, 20b and a secured storage 30a, 30b. One of the secure wallet hosting units 1a, 1b may however also be formed by a normal hosted monetary value token wallet or an unhosted monetary value token wallet 6, 7.

In the exchange illustrated in Fig. 4 a monetary value token is sent from secure wallet hosting unit 1a to secure wallet hosting unit 1b, particularly from a monetary value token wallet hosted in the secure wallet hosting unit 1a to a monetary value token wallet hosted in the secure wallet hosting unit 1b. It should be noted that secure wallet hosting unit 1a and/or 1b may be configured to perform the steps of a sender as well as the steps of a recipient of the exchange. For Fig. 4 the secure wallet hosting unit 1a may also be referred to as the sending secure wallet hosting unit and secure wallet hosting unit 1b may also referred to as the receiving secure wallet hosting unit 1b. Basically the same applies for sending/receiving payment processor 20a/20b and sending/receiving secured storage 30a/30b.

In step 410 the payment processor 20a of the secure wallet hosting unit 1a sends a token transfer indication 410 to the payment processor 20b of the secure wallet hosting unit 1b. Hence, the payment processor 20b receives the transfer indication 410. The transfer indication 410 comprises the information that a monetary value token shall be sent to the secure wallet hosting unit 1b, it may optionally comprise the monetary value of the monetary value token to be sent.

In step 420 in the receiving secure wallet hosting unit 1b, particularly in the secured storage 30b, first token summands are generated 420. First token summand generation 420 comprises (preferably consists of) steps 421-423. After receipt of the transfer indication 410, the payment processor 20b transmits a summand generation request 421 to the secured storage 30. In the receiving secured storage 30b, partial summand secrets r1_1, r1_2, r1_3 are generated 422 in the corresponding sub-units 51, 52, 53 of the secured storage 30b. Furthermore a token reference summand R1 is calculated for the partial summand secrets r1_1, r1_2, r1_3. The first token reference summand R1 can be calculated in the same way as a normal token reference would be calculated. Hence, a token secret summand is determined (r1 = r1_1+r1_2+r1_3) for which the token reference can be derived as the public key summand R1 of the secret key summand r1. Receiving secured storage 30b provides 423 the first token reference summand R1 to the receiving payment processor 20b. It should be noted that the present example assumes that n out of n partial secrets are required for the common digital signature. If m out of n cases, with m<n, (threshold signature schemes) r1_1, r1_2 and r1_3 could for example be Shamir secret shares of r1. Hence, only for example r1_1 and r1_2 can be used to retrieve r1 and/or be used to sign. The signing can include a well known technique of converting Shamir shares to additive sharing. For example, r1 may end up to equal r1-1' + r1-2' in case of cggmp21.

In step 430 the first token reference summand R1 is transmitted from the receiving payment processor 20b to the sending payment processor 20a.

At least a second token reference summand R2 is generated in step 440. Step 440 optionally is a second token summand generation comprising steps 441-443. In step 441 second summand generation is requested by payment processor 20a in secured storage 20a. Second token secret summands r2_1, r2_2, r2_3 may be generated 442 in the sub-units of the sending secured storage 30a. The second token reference summand R2 than may be derived from a determined second secret summand r2 (r2=r2_1+r2_2+r2_3; R2=public key derivation (r2)). In step 443 second token reference summand R2 would be provided from sending secured storage 30a to the sending payment processor 20a. Alternatively, the sending payment processor 20a generates r2 and derives R2 based thereon.

Optionally, pre-generated (first and/or second) token secret summands may be used in steps 422, 442, instead of generating them in the steps 422, 442. For this purpose secured storage 30a, 30b may have multiple pre-generated partial secret sets and/or multiple pre-generated partial secret summand sets, particularly pre-generated prior to the exchange, particularly prior to the initial step 410 of Fig. 4.

In step 445 the sending payment processor 20a performs token reference summation.

It calculates the token reference R of the monetary value token to be sent as a sum of received first token reference summand R1 and generated second token reference summand R2 (R=R1+R2).

The sending payment processor 20a now registers 450 the token reference R of the monetary value token to be sent in the token reference register 9. The token reference registration 450 comprises steps 451-452. In step 451 the payment processor 20a sends 451 a token reference replacement request to the token reference register 9. The token reference replacement request requests the token reference register to replace registration of p (p >=1) registered token references by registration of q (q>=1) unregistered token references, which includes the token reference R.

The token reference replacement request typically comprises at least one (typically p) digital signature(s) generated by the secret token data element(s) of the registered monetary value token(s). Thus the secured storage 30b may create (not shown) p common digital signatures for step 451. The sending payment processor 20a receives registration confirmation data 49 for the registration of token reference R in the token register from the token reference register 9. Typically, the registration confirmation data 49 comprises a signature of the token reference register for the newly registered token reference R.

If optional steps 441-443 have been performed, the second token secret summand r2 now is exported from the secured storage 30a in steps 461-463. The sending payment processor 20a requests 461 secret token summand export from the secured storage 30a. The token secret summand 461 export is similar to an export of a token secret export, which has been described in more detail above (export unit 38 may or may not be involved). The sending secured storage 30a exports the indirectly stored second token secret summand r2 e.g. by adding the second partial secret summands r2= r2_1+r2_2+r2_3 and providing 463 the second token secret summand r2 to the sending payment processor 20a.

In step 470 the receiving payment processor 20b receives at least the second token secret summand r2 (or the second partial secret summands r2_1+r2_2+r2_3) from the sending payment processor 20a. Hence, only a token secret summand r2 is transmitted, but not the full token secret r of the monetary value token to be transmitted. Optionally the token reference R and/or the registration confirmation data 49 may also be transmitted in step 470.

In step 480 token secret summation is performed, which comprises (or consists of) steps 481-482 and optional step 483. The receiving payment processor 20b requests token secret summation in the secured storage 30b in step 481. It sends the the second token secret summand r2 (or the second partial secret summands r2_1+r2_2+r2_3) to the secured storage 30b. In the secured storage 30b in step 482 the first generated secret summands r1_1, r2_1, r3-1 and the summands r2_1, r2_2, r2_3 of the received token secret r2 are summed up in the sub-units 31-33. The partial secrets 51, 52, 53 (r1=r1_1+r1 _2, r2=r1_2+r2_2, r3=r1_3+r2_3) of the indirectly stored token secret data element 12 of the received monetary value token is thus stored in receiving secured storage 30b.

After step 482, optionally before or after step 483, the secured storage 30b may perform pre-signing steps for the partial secrets. The pre-signing steps may comprise calculation of an inverse, e.g. r1⁻¹, or a multiplication, e.g. for r*nonce: r1*nonce_1 + r1 * nonce_2 + r2*nonce_1 + .... The pre-signing steps thus may be performed without knowing the data to be signed. Furthermore, the pre-signing requires communication between the sub-units of secured storage 30b, e.g. sending the own random number nonce_1, nonce_2 to the other sub-unit(s). In a future process, if the monetary value token comprising the partial secrets 51, 52, 53 (r1, r2, r3) is used as a registered monetary value token (e.g. in a future step 451), the common digital signature process can be created faster, since a pre-signature has been generated already/the pre-signing steps have been performed already. Preferably, for the common digital signature process - after pre-signing has been performed - a communication between the sub-units can be reduced or even avoided. Pre-Signing is particularly effective if the common digital signature is a ECDSA (threshold) signature.

Optionally, the receiving secure wallet hosting unit 1b may verify that a received token reference R of the received monetary value token matches a token reference derived from the stored partial secrets 51-53. The secured storage 30b may calculate a token reference for the stored partial secrets 51-53. It may also receive the token reference R received from the sending secure wallet hosting unit 1a and compare the received and the calculated token reference. The secured storage 30b in step 483 would provide a token reference conformation to the payment processor 20b. Alternatively, the secured storage 30b may provide the calculated token reference R to the payment processor 20b in step 483, which then compares the token reference received from the sending secure wallet hosting unit 1a with the token reference calculated in the receiving secure wallet hosting unit 1b.

In a final optional step 490 the receiving secure wallet hosting unit 1b sends a exchange status to the receiving secure wallet hosting unit 1a ("exchange successful" or "not successful"/"error code").

### REFERENCE SIGNS

- 1: secure wallet hosting unit
- 2-7: monetary value token wallet
- 8: token issuer unit
- 9: token reference register

- 10: wallet storage
- 11: wallet identifier
- 12: token secret
- 15: storage reference
- 20: payment processor
- 30: secured storage
- 31-34: sub-units of secured storage
- 38: export unit
- 50: monetary vale token
- 51-54: partial secrets

- 130: token signature provisioning
- 140, 160: token exchange
- 150: token export
- 191, 192: registration request
- 195: registration confirmation

- 13: wallet certificate
- 14: wallet authentication key
- 16: token value
- 17: token reference

- 21: wallet record
- 22: wallet data
- 23-25: token record

- 35: sub-unit coordinator
- 36: summation unit
- 37: token secret import unit
- 38: token secret export unit
- 39: common signature generating unit

- 311, 321, 331, 341: partial signature generation unit
- 312, 322, 332, 342: partial secret generation unit
- 313, 323, 333, 343: partial secret management unit
- 314, 324, 334, 344: partial secret storage unit

- 1a, 1b: secure wallet hosting unit
- 20a, 20b: payment processor
- 30a, 30b: secured storage
- 49: registration confirmation data

- 410: token transfer indication
- 420, 440: token summand generation
- 421, 441: generation request transmission
- 422, 442: partial summand secret generation
- 423, 443: token reference summand provisioning
- 430: token reference summand transmission
- 445: token reference summation
- 450: token reference registration
- 451: registration request transmission
- 452: registration confirmation transmission
- 460: token summand export
- 461: export request transmission
- 462: token summand provisioning
- 470: token summand transmission
- 480: token secret summation
- 481: summation request transmission
- 482: partial secret summation
- 483: token reference confirmation
- 490: status transmission

## Claims

1. A secure wallet hosting unit (1), the secure wallet hosting unit (1) hosting monetary value token wallets (2, 3, 4) of different users and comprising:
- a payment processor (20) configured for performing an exchange of an exchanged monetary value token (50) between a monetary value token wallet (2) of the secure wallet hosting unit (1) and another monetary value token wallet (7); and
- a secured storage (30);
wherein the hosted monetary value token wallets (2, 3, 4) respectively comprise at least one monetary value token (50) and a wallet identifier (11),
wherein each monetary value token (50) comprises a secret token data element (12), and
wherein the monetary value token wallets (2, 3, 4) are at least partly stored in the secured storage (30);
**characterized in that**
the secured storage (30) comprises multiple sub-units (31-34);
the sub-units (31-34) respectively store a partial secret (51-54) of the secret token data element (12) of the monetary value token (50); and
the sub-units (31-34) are configured to use their partial secrets (51-54) of the secret token data element (12) of the monetary value token (50) in a common digital signature creation process.

2. The secure wallet hosting unit (1) of claim 1, **characterized by** further comprising a wallet storage (10), wherein the partial secrets (51-54) of the secret token data element (12) of the monetary value token (50) are stored in the secured storage (30) and a further token data element (15,16,17) of the monetary value token (50), preferably a value data element (16) of the monetary value token (50) and/or a token reference (17) of the monetary value token (50) and/or a storage reference (15) of the monetary value token (50) in the secured storage (30), is stored in the wallet storage (10).

3. The secure wallet hosting unit (1) of one of the preceding claims, **characterized in that** the hosted monetary value token wallets (2, 3, 4) respectively comprise a wallet record (21), preferably in the wallet storage (10), including at least the wallet identifier (11) and one or more monetary value token records (23-25), preferably including the further token data element (15, 16, 17), and the wallet record (21) optionally including a further wallet data element (13, 14).

4. The secure wallet hosting unit (1) of one of the preceding claims, **characterized in that**
the common digital signature is created in the sub-units (51-54); and/or
the common digital signature is a threshold signature and/or ECDSA signature.

5. The secure wallet hosting unit (1) of one of the preceding claims, **characterized in that** the hosted monetary value token wallets (2, 3, 4) each comprise one or more storage references (15), wherein the storage references (15) identify the corresponding secret token data element (12) of the monetary value token (50) stored in the secured storage (30).

6. The secure wallet hosting unit (1) of one of the preceding claims, **characterized in that** the secured storage (30) is configured to provide to the payment processor (20) the common digital signature and/or a token reference (17) of the monetary value token (50).

7. The secure wallet hosting unit (1) of one of the preceding claims, **characterized in that** the payment processor (20) is configured to send the common digital signature to a token reference register (9) and/or to the other monetary value token wallet (7).

8. The secure wallet hosting unit (1) of one of the preceding claims, **characterized in that** the sub-units (31-34) are configured to generate their partial secrets (51-54) of the secret token data element (12) of the monetary value token (50).

9. The secure wallet hosting unit (1) of one of the preceding claims, **characterized in that**
the secured storage (30) is configured to generate the partial secrets (51-54) of a secret token data element (12) of a monetary value token (50) from generated first partial secret summands of the secret token data element and received second secret summand of the secret token data element; and/or
the secured storage (30) is configured to create a second secret summand of a secret token data element from partial secret summands and to provide the secret summand to the payment processor (20); and/or
the secured storage (30) is configured to derive a token reference (17) of the monetary value token (50) from the secret token data element (12) of the monetary value token (50) and to provide the token reference (17) of the monetary value token (50) to the payment processor (20).

10. The secure wallet hosting unit (1) of one of the preceding claims, **characterized in that**
the payment processor (20) - preferably in a first transmission mode, more preferably in a first token sending mode - is configured to send to the other monetary value token wallet (7) a token reference (17) and/or a registration confirmation (49) of a token reference register (9); and/or
the payment processor (20) - preferably in the first transmission mode - is configured to receive a token reference (17) or a token reference summand of a monetary value token to be sent.

11. The secure wallet hosting unit (1) of one of the preceding claims, **characterized in that** the secured storage (30) is configured to
- export a secret token data element (12) of a monetary value token (50) to be sent by the monetary value token wallet (2); and/or
- import a secret token data element (12) of a monetary value token (50) received by the monetary value token wallet (2).

12. The secure wallet hosting unit (1) of one of the preceding claims, **characterized in that** the payment processor (20), preferably in a second transmission mode, is configured to receive (150) the secret token data element (12) from the secured storage (30) and to send the secret token data element (12) in the exchange (160) of the monetary value token (50) between the monetary value token wallet (2) of the secure wallet hosting unit (1) and another monetary value token wallet (9).

13. The secure wallet hosting unit (1) of one of the preceding claims, **characterized in that** the payment processor (20), preferably in a third or reception mode, is configured to receive (160) the secret token data element (12) from the other monetary value token wallet (9) and to provide the received secret token data element to the secured storage (30).

14. The secure wallet hosting unit (1) of one of the preceding claims, **characterized in that** the secured storage (30) further comprises one or more of: a sub-unit coordinator (35), a summation unit (36) and a token secret import unit (37).

15. A monetary value token transaction system comprising
- one or more secure wallet hosting unit (1) according to one of claims 1 to 14; and
one or more of the following:
- a token register, preferably a token reference register (9); and/or
- a token issuer unit (8); and/or
- multiple local monetary value token wallets (6, 7).
